# EUROPÄISCHE PATENTSCHRIFT

(11) **EP 0 750 555 B1**
(45) Veröffentlichungstag und Bekanntmachung des Hinweises auf die Patenterteilung: **11.11.1998**
(21) Anmeldenummer: 94911168.6
(22) Anmeldetag: 14.03.1994
(51) Int. Cl.: B60T 7/06, B60R 21/00, B60T 8/88

(54) **HYDRAULISCHE KRAFTFAHRZEUGBREMSANLAGE**
MOTOR VEHICLE HYDRAULIC BRAKING SYSTEM
SYSTEME DE FREINAGE HYDRAULIQUE POUR VEHICULE AUTOMOBILE

(43) Veröffentlichungstag der Anmeldung: 02.01.1997
(73) Patentinhaber: ITT Automotive Europe GmbH, 60488 Frankfurt (DE)
(72) Erfinder: BAUER, Jürgen, D-65187 Wiesbaden (DE); ZINGEL, Heinz, D-65520 Bad Camberg (DE); BÖHM, Peter, D-61381 Friedrichsdorf (DE); DROTT, Peter, D-65936 Frankfurt am Main (DE); KNOTHE, Ulrich, D-38114 Braunschweig (DE); WITTE, Bastian, D-33649 Bielefeld (DE); SINNHUBER, Ruprecht, D-38518 Gifhorn (DE)
(86) Internationale Anmeldenummer: EP9400791
(87) Internationale Veröffentlichungsnummer: WO9525027

(56) Entgegenhaltungen:
- DE-A- 4 305 290
- DE-C- 3 941 401

## Beschreibung

Die Erfindung betrifft eine hydraulische Kraftfahrzeugbremsanlage mit einer Betätigungseinheit, die aus einem Hauptbremszylinder, einem dem Hauptbremszylinder vorgeschalteten Bremskraftverstärker sowie einem den Bremskraftverstärker betätigenden, in einer Lagerung schwenkbar angeordneten Bremspedal besteht und an einer Spritzwand des Kraftfahrzeuges befestigt ist.

Es ist bekannt, daß insbesondere bei Unfällen, die Verformungen des Kraftfahrzeug-Vorderteiles zur Folge haben, die Gefahr besteht, daß in diesem Bereich angeordnete Teile, insbesondere die an der Spritzwand angeordnete Betätigungseinheit der hydraulischen Bremsanlage, den Raum unmittelbar vor dem Fahrer so weit verringern, daß eine Verletzungsgefahr besteht. Daher ist beispielsweise aus der DE-OS 37 41 881 eine Anordnung bekannt, die bei einem Auffahrunfall auftretende Schwenkbewegungen von an einem Pedalträger angeordneten Betätigungspedalen verhindert und darüber hinaus eine Vergrößerung des Fußraumes sicherstellt. Zu diesem Zweck sind sämtliche Halterungen des Pedalträgers an der Spritzwand bei einem Auffahrunfall selbsttätig lösend ausgebildet und der Pedalträger deckt eine über die Projektion der Pedale hinausragende Öffnung in der Spritzwand ab, so daß er unter der Wirkung der auf ihn wirkenden Trägheitskräfte frei in den Motorraum ausweichen kann.

Ein Nachteil dieser bekannten Anordnung ist darin zu sehen, daß im Vorderteil bzw. im Motorraum des Kraftfahrzeuges ein Freiraum vorgesehen werden muß, der aus heutiger Sicht in der Zukunft immer begrenzter wird. Außerdem stellt die vorbekannte Anordnung eine relativ aufwendige Konstruktion mit hohem Gewicht dar, bei der gewährleistet sein muß, daß kein unbeabsichtigtes Lösen des Pedalwerks erfolgt.

Der Erfindung liegt daher die Aufgabe zugrunde, bei einer hydraulischen Kraftfahrzeugbremsanlage der eingangs genannten Gattung Maßnahmen vorzuschlagen, die auf eine platzsparende Art eine mit möglichst geringem Aufwand und Gewicht realisierbare flexible Anordnung ihrer Einzelteile im Kraftfahrzeug ermöglichen.

Diese Aufgabe wird erfindungsgemäß dadurch gelöst, daß Mittel vorgesehen sind, die bei einem zu Verformungen des Kraftfahrzeug-Vorderteiles führenden Unfall einen erhöhten Volumenbedarf der Bremsanlage simulieren und somit eine Verlängerung des Betätigungsweges der Betätigungseinheit ermöglichen. Bei der Erfindung wird also dafür gesorgt, daß die vom Fahrerfuß auf das Bremspedal ausgeübte Kraft bei einem Frontaufprall kontrolliert zusammenbricht, so daß der durch den Aufprall bedingte Kraftstoß reduziert und die Gefahr einer Fuß- bzw. Knieverletzung weitgehend eliminiert wird.

Zur Konkretisierung des Erfindungsgedankens wird vorgeschlagen, daß an mindestens einen der Hauptbremszylinder-Druckräume ein Druckmittelaufnehmer angeschlossen ist, dessen Verbindung mit dem Druckraum bei einem Unfall mittels eines hydraulischen Ventils freigegeben wird.

Bei einer vorteilhaften Weiterbildung des Erfindungsgegenstandes ist in der Verbindung eine Drossel geschaltet. Durch diese Maßnahme wird erreicht, daß ein schlagartiges Zusammenbrechen der Fußkraft wirksam verhindert bzw. ein Stoßdämpfereffekt erreicht wird.

Eine besonders kompakt bauende, fertigungstechnisch einfach realisierbare vorteilhafte Weiterbildung der Erfindung besteht darin, daß das hydraulische Ventil als ein 3/2-Wegeventil ausgebildet ist, das eine ständige verbindung zwischen dem Druckraum und den Radbremsen gewährleistet. Das Ventil ist dabei vorzugsweise elektromagnetisch betätigbar, wobei die elektromagnetische Betätigung durch Ausgangssignale eines Crash-Sensors ansteuerbar ist.

Eine kostengünstig herstellbare Ausführung der Erfindung besteht darin, daß das Ventil als Schieberventil ausgebildet ist. Dabei ist es besonders sinnvoll, wenn der Druckmittelaufnehmer und das hydraulische Ventil eine konstruktive Einheit bilden. Diese Maßnahme trägt insbesondere zur Erhöhung der Funktionsssicherheit der erfindungsgemäßen Kraftfahrzeugbremsanlage bei.

Eine weitere Senkung der Herstellungs- sowie der Montagekosten der erfindungsgemäßen Kraftfahrzeugbremsanlage wird bei einer weiteren vorteilhaften Ausgestaltung der Erfindung dadurch erreicht, daß das Ventil durch beim Unfall auftretende Trägheitskräfte betätigbar ist. Diese Maßnahme ermöglicht eine genaue Bestimmung der Auslöseschwelle der erfindungsgemäßen Anordnung durch einfaches Abstimmen der beweglichen Massen.

Eine vorteilhafte, fertigungstechnisch günstig realisierbare Weiterbildung des Erfindungsgegenstandes zeichnet sich dadurch aus, daß die konstruktive Einheit einteilig mit dem Hauptbremszylinder ausgebildet ist.

Eine andere Ausführungsform eignet sich insbesondere für Kraftfahrzeuge, die mit einem ABS-System ausgestattet sind, und bei denen zwischen dem Hauptbremszylinder und den daran angeschlossenen Radbremsen ein ABS-Druckmodulator geschaltet ist, der ein Motor-Pumpen-Aggregat aufweist, an dessen Druckseite einerseits die Hauptbremszylinder-Druckräume und andererseits über elektromagnetisch betätigbare Einlaßventile die Radbremsen angeschlossen sind, die über elektromagnetisch betätigbare Auslaßventile mit Niederdruckspeichern in Verbindung bringbar sind, die an die Saugseite des Motor-Pumpen-Aggregats angeschlossen sind, wobei eine elektronische Steuereinheit vorgesehen ist, die Ansteuer- bzw. Umschaltsignale für die Ein- und Auslaßventile erzeugt. Bei derartigen Bremsanlagen ist es besonders sinnvoll, wenn die Druckmittelaufnehmer durch die Niederdruckspeicher und die hydraulischen Ventile durch die Auslaßventile gebildet sind, wobei die elektronische Steuereinheit zum Erzeugen der Umschaltsignale für die Auslaßventile durch das Ausgangssignal eines durch den Unfall aktivierbaren Beschleunigungssensors angesteuert wird. Der erwähnte Beschleunigungssensor kann beispielsweise als ein beschleunigungsempfindlicher, elektromechanischer Schalter ausgebildet bzw. durch einen Airbagsensor gebildet sein.

Um in einem Crash-Fall das Bremspedal aktiv in eine für Beinverletzungen unkritische Zone zu bewegen, ist nach einem anderen Erfindungsmerkmal vorgesehen, daß der Bremskraftverstärker als ein Unterdruck-Bremskraftverstärker ausgebildet ist, dessen Steuerventil einerseits durch einen mit dem Bremspedal kraftübertragend verbundenen Ventilkolben und andererseits durch einen zusammen mit dem Ventilkolben verschiebbaren Elektromagneten unabhängig von der auf das Bremspedal einwirkenden Fußkraft betätigbar ist, wobei der Elektromagnet beim Unfall mittels eines von der elektronischen Steuereinheit gleichzeitig mit dem Umschaltsignalen für die Auslaßventile erzeugten Steuersignals ansteuerbar ist.

Um schließlich im Crash-Fall eine Restbremswirkung zu gewährleisten, sind die Druckmittelaufnehmer volumenmäßig kleiner ausgelegt, als die Hauptbremszylinder-Druckräume.

Weitere Merkmale und Vorteile der Erfindung gehen aus der folgenden Beschreibung von drei Ausführungsbeispielen anhand der beiliegenden Zeichnung hervor. In der Zeichnung zeigt:
- Fig. 1: ein erstes Ausführungsbeispiel der erfindungsgemäßen hydraulischen Kraftfahrzeugbremsanlage;
- Fig. 2: ein zweites Ausführungsbeispiel der hydraulischen Kraftfahrzeugbremsanlage nach der Erfindung und
- Fig. 3: einen zweiten Schaltzustand der beim Ausführungsbeispiel nach Fig. 2 verwendeten Ventilanordnung.

Die in der Zeichnung dargestellte erfindungsgemäße hydraulische Kraftfahrzeugbremsanlage besteht aus einem pneumatischen Bremskraftverstärker, vorzugsweise einem Unterdruckbremskraftverstärker 1, der mittels eines Bremspedals 3 betätigbar ist und an einer lediglich schematisch angedeuteten Spritzwand 4 des Kraftfahrzeuges befestigt ist. Auf der dem Bremspedal 3 abgewandten Seite des Bremskraftverstärkers 1 ist ein Hauptbremszylinder, vorzugsweise ein Tandemhauptzylinder 2, angeflanscht, dessen Druckräume 6,8 mit einem Druckmittelvorratsbehälter 5 in Verbindung stehen.

Eine erste hydraulische Leitung 10 verbindet den ersten, durch einen ersten Hauptzylinderkolben 7 begrenzten Druckraum 6 mit den Radbremszylindern von nur schematisch dargestellten, ggf. der Hinterachse zugeordneten zwei Radbremsen 18,19, während an den zweiten, durch einen zweiten Hauptzylinderkolben 9 begrenzten Druckraum 8 die Radbremszylinder von zwei weiteren, ggf. der Vorderachse zugeordneten Radbremsen 20,21 mittels einer zweiten hydraulischen Leitung 11, angeschlossen sind.

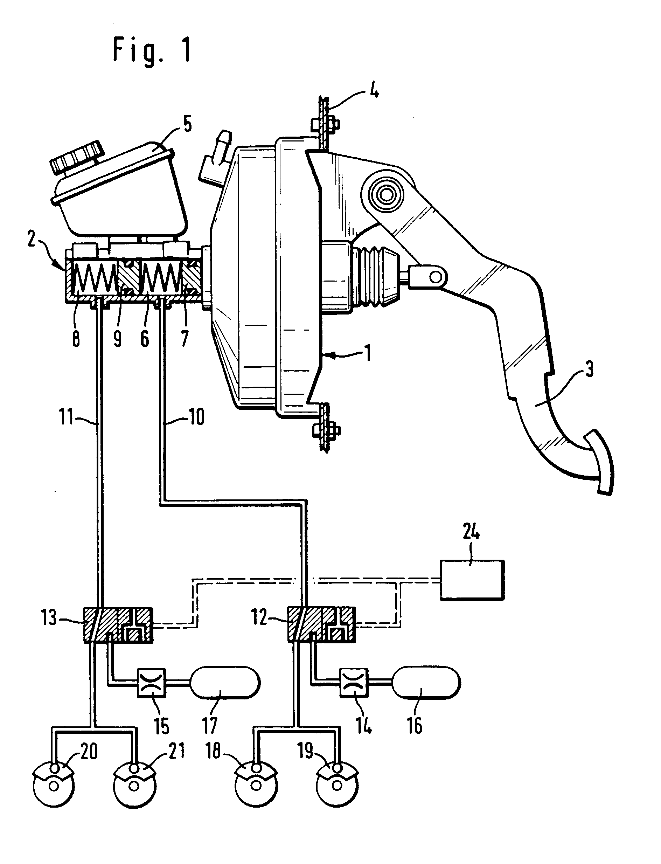

Wie Fig. 1 weiter erkennen läßt, sind in die hydraulischen Leitungen 10,11 Ventile, vorzugsweise hydraulische 3/2-Wegeventile 12,13 eingefügt, die beispielweise elektromagnetisch betätigbar ausgeführt sind und im Falle eines Auffahrunfalls durch einen Crash-Sensor 24, aktiviert werden. Durch Umschalten der Ventile 12,13 werden zu den Radbremsen 18,19 und 20,21 Druckvolumenaufnehmer 16,17 parallelgeschaltet, so daß ein erhöhter Volumenbedarf simuliert wird, der eine Verlängerung des Betätigungsweges des Bremspedals 3 zur Folge hat. Das Einströmen des Druckmittels in die Druckmittelaufnehmer 16,17 kann dabei vorzugsweise über vorgeschaltete Drosseln 14,15 erfolgen. Das Volumen der Druckmittelaufnehmer 16,17 ist vorzugsweise so gestaltet, daß bei unbeabsichtigter Betätigung der Einheit noch eine ausreichende Bremswirkung erzielt wird. Durch diese Maßnahme wird bei einem Frontaufprall eine "sanfte' Pedalweg-Charakteristik erzeugt, so daß der auf den Fahrerfuß einwirkende Kraftstoß durch eine Art 'Stoßdämpfer' gemildert wird.

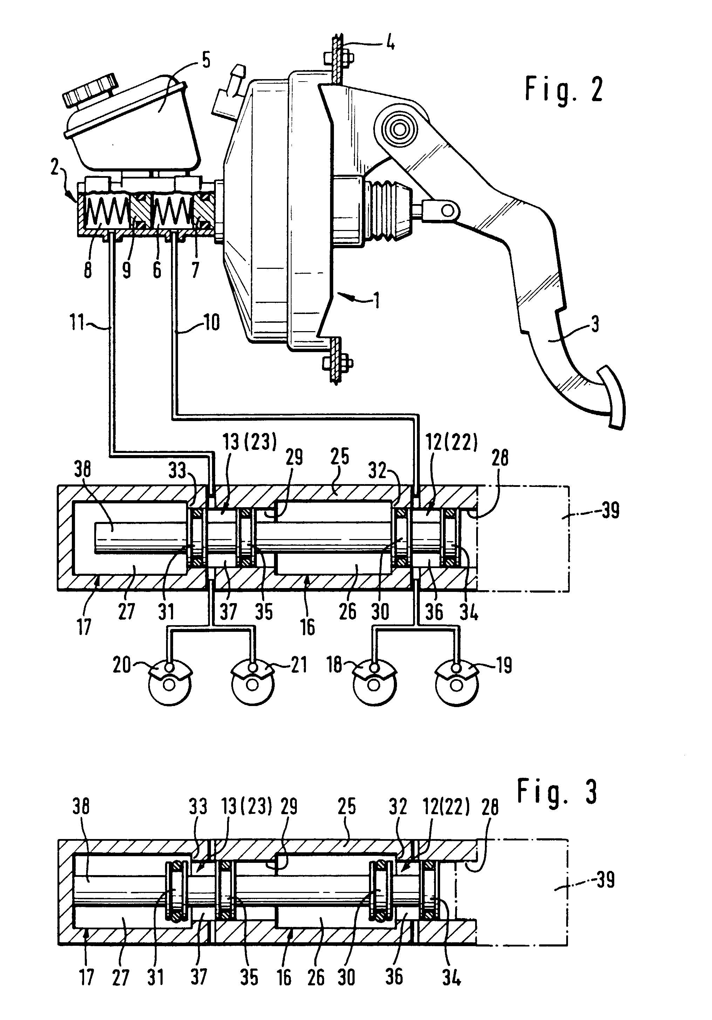

Bei der in Fig. 2 und 3 in der Lösestellung gezeigten Ausführung des Erfindungsgegenstandes sind die vorhin erwähnten Ventile 12,13 als Schieberventile 22,23 ausgebildet, die mit den Druckmittelaufnehmern 16,17 eine konstruktive Einheit bzw. Baugruppe bilden. Die Druckaufnehmer 16,17 sind zu diesem Zweck als in einem Gehäuse 25 nebeneinander ausgebildete Speicherräume 26,27 ausgeführt, wobei die Schieberventile 22,23 durch in Bohrungen 28,29 im Gehäuse 25 geführte, miteinander gekoppelte Schieber 30,31 gebildet sind, die mit an den Enden der Bohrungen 28,29 ausgebildeten Steuerkanten 32,33 zusammenwirken, deren Öffnungsgrad gleichzeitig die vorhin erwähnte Drosselwirkung bestimmt. Die Schieber 30,31 begrenzen zusammen mit in einem axialen Abstand angeordneten, in den Bohungen 28,29 abgedichtet geführten Bunden 34,35 Ringräume 36,37, an die die hydraulischen Leitungen 10 und 11 angeschlossen sind, so daß die Schieber 30,31 druckausgeglichen sind. Um den Öffnungsweg der Schieberventile 22,23 zu begrenzen ist der in der Zeichnung links dargestellte Schieber 31 mit einem axialen Fortsatz 38 versehen, der bei einer Verschiebung der Schieber 30,31 am linken Ende des Gehäuses 25 anschlägt (Fig. 3). Die Schieberventile 22,23 können mittels eines lediglich schematisch angedeuteten Auslösemechanismus 39 betätigt werden, der beispielsweise auf elektromechanischem bzw. -magnetischem oder pyrotechnischem Prinzip arbeitet. Es ist auch denkbar, zur Betätigung der Ventile 22,23 die bei einem Aufprall auftretenden Trägheitskräfte zu nutzen. Das Gehäuse 25 der Ventilanordnung ist dann im Kraftfahrzeug an einer geeigneten Stelle, vorzugsweise nach der Fahrtrichtung ausgerichtet, einzubauen.

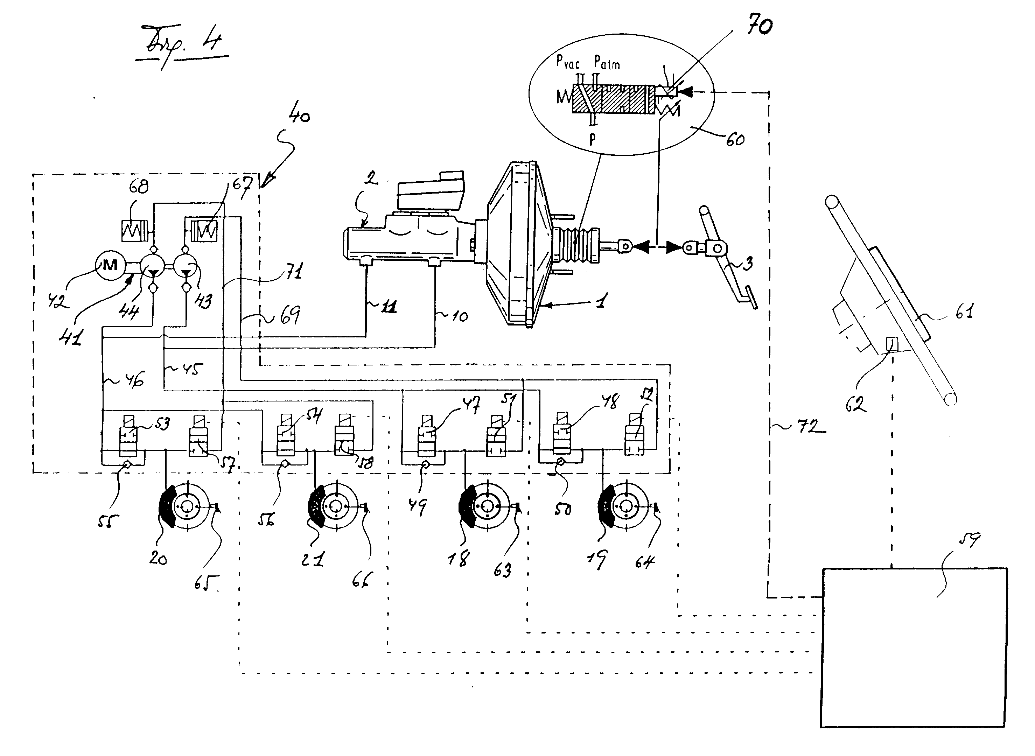

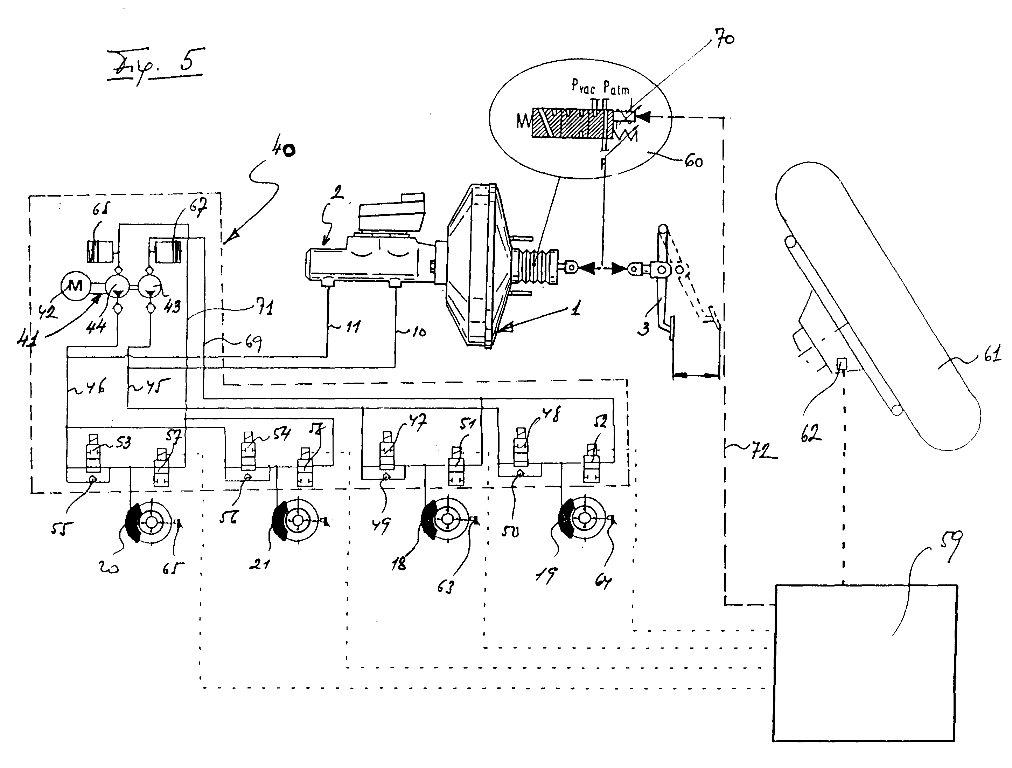

Bei der in Fig. 4 und Fig. 5 dargestellten Ausführung der erfindungsgemäßen Bremsanlage ist zwischen dem Hauptbremszylinder 2 und den einzelnen Radbremsen 18,19,20,21 ein ABS-Druckmodulator 40 geschaltet, der in einem ABS-Regelfall eine Modulation der in den Radbremsen 18 bis 21 herrschenden Drücke ermöglicht. Der ABS-Druckmodulator 40 weist ein hydraulisches Motor-Pumpen-Aggregat 41 auf, das aus einer den Radbremsen 18,19 zugeordneten ersten Pumpe 43, einer den Radbremsen 20,21 zugeordneten zweiten Pumpe 44 sowie einem beide Pumpen 43,44 antreibenden Elektromotor 42 besteht. Von der Druckseite der Pumpen 43,44 führen zu den Radbremsenpaaren 18,19 bzw. 20,21 hydraulische Leitungen 45,46, die über die im Zusammenhang mit Fig. 1 erwähnten Leitungen 10,11 mit den Druckräumen des Hauptbremszylinders 2 in Verbindung stehen und in die den Radbremsen 18 bis 21 zugeordnete Parallelschaltungen je eines vorzugsweise stromlos offenen, elektromagnetisch betätigbaren Einlaßventils 47,48 bzw. 53,54 mit je einem Rückschlagventil 49,50 bzw. 55,56 eingefügt sind. An die einzelnen Radbremspaare 18,19, bzw. 20,21 sind weitere hydraulische Leitungen 69,71 angeschlossen, die unter Zwischenschaltung von elektromagnetisch betätigbaren, vorzugsweise stromlos geschlossenen Auslaßventilen 51,52 bzw. 57,58 eine Verbindung der Radbremsenpaare 18,19 bzw. 20,21 mit je einem Niederdruckspeicher 67 bzw. 68 ermöglichen, der an der Saugseite der zugeordneten Pumpe 43 bzw. 44 angeschlossen ist. Den Radbremsenpaaren 18,19 bzw. 20, 21, die beispielsweise je einer Fahrzeugachse zugeordnet sein können (Schwarz-Weiß-Aufteilung der Bremskreise), sind Radsensoren 63,64,65,66 zugeordnet, deren Ausgangssignale über nicht dargestellte Signalleitungen einer elektronischen Steuereinheit 59 zugeführt werden, die in einem ABS-Regelfall Steuer- bzw. Umschaltsignale sowohl für die Ein- (47,48, 53,54) als auch die Auslaßventile 51,52,57,58 erzeugt. Außerdem wird der elektronischen Steuereinheit 59 das Ausgangssignal eines durch einen Unfall aktivierbaren Beschleunigungssensors 62 zugeführt, der im dargestellten Beispiel durch einen der Auslösung des Airbags 61 dienenden Airbagsensor gebildet ist.

In der in Fig. 4 gezeigten Grund- bzw. Ruhestellung der erfindungsgemäßen Bremsanlage kann über die stromlos offenen (SO) Einlaßventile 47,48,53,54 in den Radbremsen 18 bis 21 jederzeit ein hydraulischer Druck aufgebaut werden. Bei einem Frontaufprall bzw. einem Crash, der vom Beschleunigungs- bzw. Airbagsensor 62 erkannt wird, erzeugt die elektronische Steuereinheit 59 Umschaltsignale für die normalerweise geschlossenen Auslaßventile 51,52,57,58, die die zu den Niederdruckspeichern 67,68 führenden Verbindungen 69,71 freigeben, so daß das aus dem Hauptbremszylinder 2 verdrängte Druckmittelvolumen in die Niederdruckspeicher 67,68 entlassen werden kann. Der beschriebene Betriebszustand der erfindungsgemäßen Bremsanlage ist in Fig. 5 dargestellt.

Um die bei einem Crash auftretende Verletzungsgefahr weiter zu verringern, kann als Bremskraftverstärker 1 ein Unterdruck-Bremskraftverstärker verwendet werden, dessen in der Zeichnung lediglich schematisch dargestelltes Steuerventil 60 einerseits mittels eines mit dem Bremspedal 3 gekoppelten, nicht gezeigten Ventilkolbens und andererseits unabhängig von der auf das Bremspedal 3 einwirkenden Betätigungskraft durch einen Elektromagneten 70 betätigbar ist, der als Bestandteil des Ventilkolbens ausgebildet und zusammen mit diesem verschiebbar ist. Bei einer solchen Anordnung erzeugt die elektrische Steuereinheit 59 im Crash-Fall gleichzeitig mit den Umschaltsignalen für die Auslaßventile 51,52,57,58 ein weiteres Steuersignal, das über eine Steuerleitung 72 dem Elektromagneten 70 zugeführt wird. Durch die Fremdbetätigung des Steuerventils 60 wird im Gehäuse des Unterdruck-Bremskraftverstärkers 1 ein pneumatischer Differenzdruck eingesteuert, der eine Bewegung des Ventilkolbens sowie des Bremspedals 3 (Fig. 5) in Betätigungsrichtung zur Folge hat. Dadurch wird das Bremspedal 3 aktiv in einen im Hinblick auf die Verletzungsgefahr unkritischen Bereich bewegt. Um auch in einem Crash-Fall eine Restbremswirkung zu gewährleisten, ist es sinnvoll, die Niederdruckspeicher 67,68 kleiner als die Hauptbremszylinder-Druckräume 6,8 auszulegen.

### Bezugszeichenliste

- 1: Unterdruckbremskraftverstärker
- 2: Hauptbremszylinder
- 3: Bremspedal
- 4: Spritzwand
- 5: Druckmittelvorratsbehälter
- 6: Druckraum
- 7: Kolben
- 8: Druckraum
- 9: Kolben
- 10: Leitung
- 11: Leitung
- 12: Ventil
- 13: Ventil
- 14: Drossel
- 15: Drossel
- 16: Druckmittelaufnehmer
- 17: Druckmittelaufnehmer
- 18: Radbremse
- 19: Radbremse
- 20: Radbremse
- 21: Radbremse
- 22: Schieberventil
- 23: Schieberventil
- 24: Crash-Sensor
- 25: Gehäuse
- 26: Speicherraum
- 27: Speicherraum
- 28: Bohrung
- 29: Bohrung
- 30: Schieber
- 31: Schieber
- 32: Steuerkante
- 33: Steuerkante
- 34: Bund
- 35: Bund
- 36: Ringraum
- 37: Ringraum
- 38: Fortsatz
- 39: Auslösemechanismus
- 40: ABS-Druckmodulator
- 41: Motor-Pumpen-Aggregat
- 42: Elektromotor
- 43: Pumpe
- 44: Pumpe
- 45: Leitungsabschnitt
- 46: Leitungsabschnitt
- 47: Einlaßventil
- 48: Einlaßventil
- 49: Rückschlagventil
- 50: Rückschlagventil
- 51: Auslaßventil
- 52: Auslaßventil
- 53: Einlaßventil
- 54: Einlaßventil
- 55: Rückschlagventil
- 56: Rückschlagventil
- 57: Auslaßventil
- 58: Auslaßventil
- 59: Steuereinheit
- 60: Steuerventil
- 61: Airbag
- 62: Airbagsensor
- 63: Radsensor
- 64: Radsensor
- 65: Radsensor
- 66: Radsensor
- 67: Niederdruckspeicher
- 68: Niederdruckspeicher
- 69: Niederdruckspeicher
- 70: Elektromagnet

## Patentansprüche

1. Hydraulische Kraftfahrzeugbremsanlage mit einer Betätigungseinheit, die aus einem Hauptbremszylinder (2), einem dem Hauptbremszylinder vorgeschalteten Bremskraftverstärker (1) sowie einem den Bremskraftverstärker (1) betätigenden, in einer Lagerung schwenkbar angeordneten Bremspedal (3) besteht und an einer Spritzwand (4) des Kraftfahrzeuges befestigt ist, dadurch **gekennzeichnet**, daß Mittel (12 - 17, 22,73,26,27,67,68,51,52,57,58,60,70) vorgesehen sind, die bei einem zu Verformungen des Kraftfahrzeug-Vorderteiles führenden Unfall einen erhöhten Volumenbedarf der Bremsanlage simulieren und somit eine Verlängerung des Betätigungsweges der Betätigungseinheit (1,2) ermöglichen.

2. Hydraulische Kraftfahrzeugbremsanlage nach Anspruch 1, dadurch **gekennzeichnet**, daß an mindestens einen der Druckräume (6,8) des Hauptbremszylinders (2) ein Druckmittelaufnehmer (16,17) angeschlossen ist, dessen Verbindung mit dem Druckraum (6,8) bei einem Unfall mittels eines hydraulischen Ventils (12,13) freigegeben wird.

3. Hydraulische Kraftfahrzeugbremsanlage nach Anspruch 2, dadurch **gekennzeichnet**, daß in der Verbindung eine Drossel (14,15) geschaltet ist.

4. Hydraulische Kraftfahrzeugbremsanlage nach Anspruch 2 oder 3, dadurch **gekennzeichnet**, daß das hydraulische Ventil (12,13) als ein 3/2-Wegeventil ausgebildet ist, das eine ständige Verbindung zwischen dem Druckraum (6,8) und den Radbremsen (18,19 bzw. 20,21) gewährleistet.

5. Hydraulische Kraftfahrzeugremsanlage nach einem der vorhergehenden Ansprüche 2 bis 4, dadurch **gekennzeichnet**, daß das Ventil (12,13) elektromagnetisch betätigbar ist.

6. Hydraulische Kraftfahrzeugbremsanlage nach Anspruch 5, dadurch **gekennzeichnet**, daß die elektromagnetische Betätigung des Ventils (12,13) durch das Ausgangssignal eines Crash-Sensors (24) angesteuert wird.

7. Hydraulische Kraftfahrzeugbremsanlage nach einem der Ansprüche 2 bis 4, dadurch **gekennzeichnet**, daß das Ventil (12,13) als Schieberventil ausgebildet ist.

8. Hydraulische Kraftfahrzeugbremsanlage nach einem der Ansprüche 2 bis 4, dadurch **gekennzeichnet**, daß der Druckmittelaufnehmer (16,17) und das hydraulische Ventil (12,13) eine konstruktive Einheit bilden.

9. Hydraulische Kraftfahrzeugremsanlage nach einem der Ansprüche 2 bis 4, dadurch **gekennzeichnet**, daß das Ventil (22,23) durch beim Unfall auftretende Trägheitskräfte betätigbar ist.

10. Hydraulische Kraftfahrzeugbremsanlage nach Anspruch 8, dadurch **gekennzeichnet**, daß die konstruktive Einheit einteilig mit dem Hauptbremszylinder (2) ausgebildet ist.

11. Hydraulische Kraftfahrzeugbremsanlage nach Anspruch 2, wobei zwischen dem Hauptbremszylinder (2) und den daran angeschlossenen Radbremsen (18,19,20,21) ein ABS-Druckmodulator (40) geschaltet ist, der ein Motor-Pumpen-Aggregat (41) aufweist, an dessen Druckseite einerseits die Hauptzylinder-Druckräume und andererseits über elektromagnetisch betätigbare Einlaßventile (47,48,53,54) die Radbremsen (18,19,20,21) angeschlossen sind, die über elektromagnetisch betätigbare Auslaßventile (51,52,57,58) mit Niederdruckspeichern (67,68) in Verbindung stehen, die an die Saugseite des Motor-Pumpen-Aggregats (41) angeschlossen sind und wobei eine elektronische Steuereinheit (59) vorgesehen ist, die Ansteuer- bzw. Umschaltsignale für die Ein- und Auslaßventile erzeugt, dadurch **gekennzeichnet**, daß die Druckmittelaulilehmer durch die Niederdruckspeicher (67,68) und die hydraulischen Ventile durch die Auslaßventile (51,52,57,58) gebildet sind, wobei die elektronische Steuereinheit (59) zum Erzeugen der Umschaltsignale für die Auslaßventile (51,52,57,58) durch das Ausgangssignal eines durch den Unfall aktivierbaren Beschleunigungssensors (62) angesteuert wird.

12. Hydraulische Kraftfahrzeugbremsanlage nach Anspruch 10, dadurch **gekennzeichnet**, daß der Beschleunigungssensor (62) als ein beschleunigungsempfindlicher, elektromechanischer Schalter ausgebildet ist.

13. Hydraulische Kraftfahrzeugbremsanlage nach Anspruch 10, dadurch **gekennzeichnet**, daß der Beschleunigungssensor (62) durch einen Airbagsensor gebildet ist.

14. Hydraulische Kraftfahrzeugbremsanlage nach einem der Ansprüche 10 bis 12, dadurch **gekennzeichnet**, daß der Bremskraftverstärker (1) als ein Unterdruck-Bremskraftverstärker ausgebildet ist, dessen Steuerventil (60) einerseits durch einen mit dem Bremspedal (3) kraftübertragend verbundenen Ventilkolben und andererseits durch einen zusammen mit dem Ventilkolben verschiebbaren Elektromagneten (70) unabhängig von der auf das Bremspedal (3) einwirkenden Fußkraft betätigbar ist, wobei der Elektromagnet (70) beim Unfall mittels eines von der elektronischen Steuereinheit (59) gleichzeitig mit den Umschaltsignalen für die Auslaßventile (51,52,57,58) erzeugten Steuersignals ansteuerbar ist.

15. Hydraulische Kraftfahrzeugbremsanlage nach einem der vorhergehenden Ansprüche, dadurch **gekennzeichnet**, daß die Druckmittelaufnehmer (16,17,26,27,67,68) volumenmäßig kleiner ausgelegt sind als die Hauptzylinder-Druckräume (6,8).

## Claims

1. Hydraulic automotive vehicle brake system including an actuating assembly comprising a master brake cylinder (2), a brake power booster (1) connected upstream of the master brake cylinder, and a brake pedal (3) actuating the brake power booster (1) and being tiltably arranged in a mounting support, the actuating assembly being attached to a splashboard (4) of the automotive vehicle,
**characterized** in that means (12-17, 22, 23, 26, 27, 67, 68, 51, 52, 57, 58, 60, 70) are provided which simulate an increased volume requirement of the brake system in an accident causing deformations of the front part of the automotive vehicle and, thus, permit an increased actuating travel of the actuating assembly (1, 2).

2. Hydraulic automotive vehicle brake system as claimed in claim 1,
**characterized** in that a pressure fluid receiver (16, 17) is connected to at least one of the pressure chambers (6, 8) of the master brake cylinder (2), and the connection between the pressure fluid receiver (16, 17) and the pressure chamber (6, 8) is opened by a hydraulic valve (12, 13) in an accident.

3. Hydraulic automotive vehicle brake system as claimed in claim 2,
**characterized** in that a restrictor (14, 15) is inserted into the connection.

4. Hydraulic automotive vehicle brake system as claimed in claim 2 or claim 3,
**characterized** in that the hydraulic valve (12, 13) is a three-way/two-position directional control valve permitting a permanent connection between the pressure chamber (6, 8) and the wheel brakes (18, 19 and 20, 21, respectively).

5. Hydraulic automotive vehicle brake system as claimed in any one of the preceding claims 2 to 4,
**characterized** in that the valve (12, 13) is operable electromagnetically.

6. Hydraulic automotive vehicle brake system as claimed in claim 5,
**characterized** in that the electromagnetic actuation of the valve (12, 13) is triggered by the output signal of a crash sensor (24).

7. Hydraulic automotive vehicle brake system as claimed in any one of claims 2 to 4,
**characterized** in that the valve (12, 13) is a slide valve.

8. Hydraulic automotive vehicle brake system as claimed in any one of claims 2 to 4,
**characterized** in that the pressure fluid receiver (16, 17) and the hydraulic valve (12, 13) form a construction unit.

9. Hydraulic automotive vehicle brake system as claimed in any one of claims 2 to 4,
**characterized** in that the valve (22, 23) is operable by inertia forces caused in an accident.

10. Hydraulic automotive vehicle brake system as claimed in claim 8,
**characterized** in that the construction unit is designed integrally with the master brake cylinder (2).

11. Hydraulic automotive vehicle brake system as claimed in claim 2,
wherein an ABS pressure modulator (40) is interposed between the master brake cylinder (2) and the connected wheel brakes (18-21) which includes a motor-and-pump assembly (41), to the pressure side of which the master cylinder pressure chambers, on the one hand, and, on the other hand, the wheel brakes (18-21) are connected by way of electromagnetically operable inlet valves (47, 48, 53, 54), the wheel brakes being connected to low-pressure accumulators (67, 68) by way of electromagnetically operable outlet valves (51, 52, 57, 58), the low-pressure accumulators being connected to the suction side of the motor-and-pump assembly (41), and an electronic control unit (59) is provided which generates actuating or change-over signals for the inlet and outlet valves,
**characterized** in that the pressure fluid receivers are provided by the low-pressure accumulators (67, 68) and the hydraulic valves are provided by the outlet valves (51, 52, 57, 58), and the electronic control unit (59) for generating the change-over signals for the outlet valves (51, 52, 57, 58) is triggered by the output signal of an acceleration sensor (62) adapted to be activated in an accident.

12. Hydraulic automotive vehicle brake system as claimed in claim 10,
**characterized** in that the acceleration sensor (62) takes the form of an acceleration-responsive, electromechanic switch.

13. Hydraulic automotive vehicle brake system as claimed in claim 10,
**characterized** in that the acceleration sensor (62) takes the form of an airbag sensor.

14. Hydraulic automotive vehicle brake system as claimed in any one of claims 10 to 12,
**characterized** in that the brake power booster (1) is configured as a vacuum brake power booster, the control valve (60) of which is operable by a valve piston operatively connected to the brake pedal (3), on the one hand, and, on the other hand, by an electromagnet (70) that is displaceable jointly with the valve piston irrespective of the pedal force acting on the brake pedal (3), wherein the electromagnet (70) in an accident is adapted to be triggered by a control signal which is generated by the electronic control unit (59) simultaneously with the change-over signals for the outlet valves (51, 52, 57, 58).

15. Hydraulic automotive vehicle brake system as claimed in any one of the preceding claims,
**characterized** in that the pressure fluid receivers (16, 17, 26, 27, 67, 68) have a smaller size in terms of volume than the master cylinder pressure chambers (6, 8).

## Revendications

1. Système hydraulique de freinage, pour véhicule automobile, comprenant une unité d'actionnement qui est constituée d'un maître-cylindre de frein (2), d'un amplificateur de force de freinage (1), monté en amont du maître-cylindre de frein, et d'une pédale de frein (3) actionnant l'amplificateur de force de freinage (1) et montée basculante dans un palier, et qui est fixée au tablier (4) du véhicule, caractérisée en ce qu'il est prévu des moyens (12 - 17, 22, 23, 26, 27, 67, 68, 51, 52, 57, 58, 60, 70) qui, en cas d'accident entraînant des déformations de la partie avant du véhicule, simulent un besoin accru en volume demandé au système de freinage et permettent ainsi un allongement de la course d'actionnement de l'unité d'actionnement (1, 2).

2. Système hydraulique de freinage pour véhicule automobile suivant la revendication 1, caractérisé en ce qu'il est prévu, raccordé à au moins l'une des chambres de pression (6, 8) du maître-cylindre de frein (2), un récepteur d'agent de pression (16, 17) dont la liaison avec la chambre de pression (6, 8) est libérée en cas d'accident au moyen d'une valve hydraulique (12, 13).

3. Système hydraulique de freinage pour véhicule automobile suivant la revendication 2, caractérisé en ce qu'un étranglement (14, 15) est monté dans la liaison.

4. Système hydraulique de freinage pour véhicule automobile suivant la revendication 2 ou 3, caractérisé en ce que la valve hydraulique (12, 13) est réalisée sous forme d'une valve à 3 voies/2 positions qui assure une liaison permanente entre la chambre de pression (6, 8) et les freins de roue (respectivement 18, 19 et 20, 21).

5. Système hydraulique de freinage pour véhicule automobile, caractérisé à ce que la valve (12, 13) est à actionnement électromagnétique.

6. Système hydraulique de freinage pour véhicule automobile suivant la revendication 5, caractérisé en ce que l'actionnement électromagnétique de la valve (12, 13) est commandé par le signal de sortie d'un détecteur de collision (24).

7. Système hydraulique de freinage pour véhicule automobile suivant l'une des revendications 2 à 4, caractérisé en ce que la valve (12, 13) est réalisée sous forme d'une valve à tiroir.

8. Système hydraulique de freinage pour véhicule automobile suivant l'une des revendications 2 à 4, caractérisé en ce que le récepteur d'agent de pression (16, 17) et la valve hydraulique (12, 13) constituent une unité structurelle.

9. Système hydraulique de freinage pour véhicule automobile suivant l'une des revendications 2 à 4, caractérisé en ce que la valve (12, 13) peut être actionnée par des forces d'inertie se présentant en cas d'accident.

10. Système hydraulique de freinage pour véhicule automobile suivant la revendication 8, caractérisé en ce que l'unité structurelle est réalisée d'un seul bloc avec le maître-cylindre de frein (2).

11. Système hydraulique de freinage pour véhicule automobile suivant la revendication 2, dans lequel il est prévu, monté entre le maître-cylindre de frein (2) et les freins de roue (18 - 21) qui lui sont raccordés, un modulateur de pression ABS qui comprend un ensemble moteur-pompes (41) au côté de refoulement duquel sont raccordés d'une part les chambres de pression de maître-cylindre et d'autre part, par l'intermédiaire de valves d'entrée (47, 48, 53, 54) à actionnement électromagnétique, les freins de roue (18 - 21) qui communiquent par l'intermédiaire de valves de sortie (51, 52, 57, 58) à actionnement électromagnétique avec des accumulateurs basse pression (67, 68) qui sont raccordés au côté d'aspiration de l'ensemble moteur-pompes (41), tandis qu'il est prévu une unité de commande électronique (59) qui produit des signaux de commande ou de commutation pour les valves d'entrée et valves de sortie, caractérisé en ce que le récepteur d'agent de pression est constitué pas les accumulateurs à basse pression (67, 68) et les valves hydrauliques constituées par les valves de sortie (51, 52, 57, 58), tandis que l'unité de commande électronique (59) servant à produire les signaux de commutation destinés aux valves de sortie (51, 52, 57, 58) est commandée par le signal de sortie d'un capteur d'accélération (62) activable par l'accident.

12. Système hydraulique de freinage pour véhicule automobile suivant la revendication 10, caractérisé à ce que le capteur d'accélération (62) est réalisé sous forme d'un interrupteur électromécanique sensible à l'accélération.

13. Système hydraulique de freinage pour véhicule automobile suivant la revendication 10, caractérisé en ce que le capteur d'accélération (62) est constitué par un capteur de sac gonflable de sécurité.

14. Système hydraulique de freinage pour véhicule automobile suivant l'une des revendications 10 à 12, caractérisé en ce que l'amplificateur d'effort de freinage (1) est réalisé sous forme d'un amplificateur d'effort de freinage à dépression dont la valve de commande (60) peut être actionnée, d'une manière indépendante de la force au pied s'exerçant sur la pédale de frein (3), d'une part au moyen d'un piston de valve relié à la pédale de frein (3) d'une manière transmettant les forces et d'autre part au moyen d'un électroaimant (70) déplaçable en commun avec le piston de valve, l'électroaimant (70) pouvant être commandé en cas d'accident au moyen d'un signal de commande produit par l'unité de commande électronique (59) en même temps que les signaux de commutation destinés aux valves de sortie (51, 52, 57, 58).

15. Système hydraulique de freinage pour véhicule automobile suivant l'une des revendications précédentes, caractérisé à ce que les récepteurs d'agent de pression (16, 17, 26, 27, 67, 68) sont plus petits en ce qui concerne le volume que les chambres de pression de maître-cylindre (6, 8).
